# EUROPEAN PATENT APPLICATION

(11) **EP 2 055 837 A1**
(43) Date of publication of application: **06.05.2009**
(21) Application number: 07021452.3
(22) Date of filing: 05.11.2007
(51) Int. Cl.: E01F 8/00

(54) **Soundproofing module**

(71) Applicant: Jackson Colomer, Ines, 08010 Barcelona (ES)
(72) Inventor: Jackson Colomer, Ines, 08010 Barcelona (ES)
(74) Representative: Torras Toll, Jorge

(57) **Abstract**

A "Soundproofing Module", that consists of a hollow element and hermetically closed in whose interior there exist conditions of a vacuum or near-vacuum, which walls or greater sides may present a convexly curved shape and advantageously a cladding for the dissipation of vibrations

## Description

### TECHNICAL FIELD OF THE INVENTION

The object of this invention, as expressed herein, is an item or unitary assembly of repeated items used in a construction in order to prevent the transmission of noise.

### BACKGROUND OF THE INVENTION.

Noise is defined as any type of irksome, undesirable and irritating sound, and it is considered to be a constant polluting factor in most cities. It is a proven fact that being subjected to undesired sounds negatively affects the quality of life of persons, as it may even cause physiological disorders, such as hearing problems, and psychological disorders such as sleep, behavioural and memory disturbances.

Faced with the problems generated by noise pollution, different methods of solution have been proposed in order to control noise by means of passive methods such as insulation, absorbent materials and noise screens or barriers.

Insulators are elements which prevent the direct transmission of vibrations. Their basic function is to dissipate the mechanical energy associated with vibrations, and their focus of action is concentrated on the points where vibrations are generated and where sound wave collapse is promoted, generally at noisy machinery.

Absorbent materials are those which bring about the loss of intensity of sound radiation when this passes through the material. The main characteristic of these materials lies in that they trap sound waves and subsequently transform the aerodynamic energy into thermodynamic energy or heat. Among the most common materials of this type are fibrous, porous or reactive resonators, glass fibre and cellular polyurethane.

Noise screens or barriers consist of a type of screen placed as a barrier between the source of the noise and the receiver of the sound, with the purpose of sheltering the persons who may be near the location from an excess of direct noise and from the nuisance.

The most obvious example of this solution may be seen in the screens arranged in parallel with the fast vehicle traffic lanes in urban areas.
The object of this invention relates to this type of device, regarding which there are a great number of patents, of which the following may be highlighted:
ES 2 047 432 Improvements introduced in anti-noise screens applicable to transport routes.
U 9802301 Improved glass fibre sound barrier structure.
ES 2 205 442 Noise barrier with decoupler.
ES 2 245 593 Block for noise protection.
ES 2 115 900 Noise-absorbent panel.
ES 2 159 364 Method for the manufacture of a sound baffle and sound baffle of sandwich construction.
ES 2 220 693 Sandwich sound baffle.
ES 2 216 201 Method for the manufacture of materials and composite panels, and device for this method.
U 200500361 Sound baffle.

All these devices consist of noise panels or barriers whose operation is based on the damping or the mechanical dissipation of the sound waves by means of the combination of materials with a high absorption index but, however high this may be, it never reaches values of 100%.

### DESCRIPTION OF THE INVENTION.

The function of the new soundproofing module is to guarantee a good level of acoustic comfort, in such a way that the level of noise, from the point where the sound caused by any type of activity becomes harmful to persons, is not felt.

It is for this reason that this device is defined as a noise barrier or panel based on a vacuum as a means of interruption or blocking of the sound waves.

The new soundproofing module is comprised of a parallelepipedic shaped hollow body or element which is hermetically closed, in whose interior there are conditions of a vacuum or near-vacuum.

In order to achieve said characteristics, the soundproofing module presents a convexly curved configuration of its greater sides, and conveniently features a vibration-dissipating cladding and a vacuum valve, preferably executed in a single piece.

At its internal zone, the hollow parallelepipedic element features reinforcing ribbing on its surfaces.

Preferably, the hollow body or element is formed by two identical parts joined at their internal sides, thus creating an internal vacuum chamber.

In order to facilitate airtightness between the parts, an intermediate perimeter airtightness seal is arranged between both rear sides of the parts, in order to seal the internal vacuum chamber, preventing the ingress of air into the interior of the receptacle, and to act in turn as a damping element for the vibrations which may be transmitted through the walls perpendicular to the external sides.

The air may be extracted from the hollow internal chamber via the valve on the external side of the plastic parts until the desired vacuum conditions are achieved, or to re-establish said conditions in the event of their having been lost.

This valve is comprised of a small flap which closes over a small orifice made in the surface of the greater sides of the parallelepipedic shaped hollow element.

Once the soundproofing module has been constituted as a parallelepipedic construction unit, it shall be arranged as many times as necessary in order to construct a noise barrier or screen.

This screen will be built by means of the joining of several parallelepipedic construction units, conveniently assembled so as to form insulating cells. It will be necessary to have available the appropriate ironwork for the fixing of the same to the space or location of installation and use.

The use of a vacuum chamber as noise insulation in the new invention presented causes the noise barrier or screen to present a high level of noise mitigation, this being greater, the greater the surface of the soundproofing modules of which it is comprised, and the greater the degree of vacuum which the structure may resist.

### DESCRIPTION OF THE DRAWINGS

With the purpose of illustrating the information set forth in this document, a sheet of drawings accompanies this specification, in which various embodiments of the invention are portrayed.

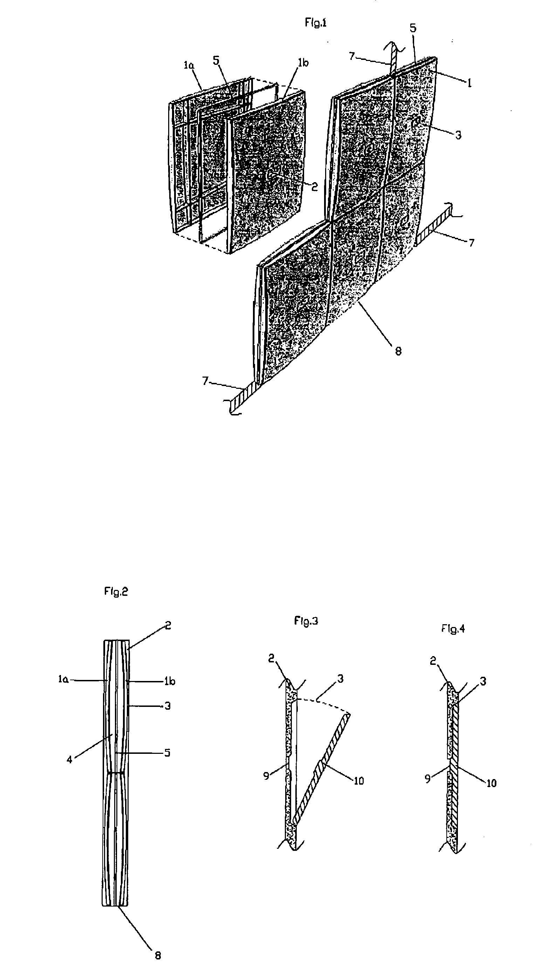

- Figure 1: portrays an exploded view of the soundproofing module with regard to the noise barrier or screen, in accordance with the invention.
- Figure 2: portrays a detail of a longitudinal cross-section of the soundproofing module featuring an absorbent external cladding.
- Figure 3: portrays a detail of the longitudinal cross-section of the vacuum valve featured on the external front side of the plastic part, with the valve in the open position.
- Figure 4: portrays a detail of the longitudinal cross-section of the vacuum valve featured on the external front side of the plastic part, with the valve in the closed position.

### DESCRIPTION OF THE EXAMPLE:

The soundproofing module (1) is comprised of two identical external parallelepipedic plastic parts (1a and 1 b), whose external front sides are curved and whose internal rear sides are flat. The plastic parts (1a and 1b) are placed back-to-back (the internal side of 1 a facing the internal side of 1 b).

The curved front external side features a cladding of vibration-absorbent material in order to dissipate the sound (2), also featuring a small orifice (9) which, on being opened or closed by means of a small flap (10) on the plastic part, will act as a vacuum valve (3).

Said plastic parts (1a and 1 b) are joined at their flat internal sides, thus creating an internal vacuum chamber (4).

To this end, an intermediate perimeter airtightness seal (5) is arranged between the two sides of the plastic parts (1a and 1 b) in order to seal the hollow internal chamber (4), thus guaranteeing airtightness and the correct operation of the soundproofing module (1).

Internal reinforcing ribbing (6) is arranged on the plastic parts (1a and 1b) in order to guarantee the resistance of the soundproofing module (1) with regard to the stresses to which it may be subjected.

Once the soundproofing module (1) is constituted as a construction unit, this will be arranged as many times as necessary on a supporting structure (7) in order to construct a noise barrier or screen (8).

## Claims

1. A "Soundproofing Module" of the type which is repeated in a construction in order to prevent the transmission of sound, **characterised** essentially in that it is comprised of a hermetically closed hollow parallelepipedic shaped element (1) in whose interior there exist conditions of a vacuum or near-vacuum.

2. A "Soundproofing Module", according to claim 1, **characterised in that** its greater sides present a convexly curved configuration.

3. A "Soundproofing Module", according to preceding claims, **characterised in that** the parallelepipedic hollow element features reinforcing elements or ribbing on its surface (6).

4. A "Soundproofing Module", according to preceding claims, **characterised in that** each parallelepipedic shaped hollow element (1) may feature a valve (3) for the extraction of the air from its interior until the desired vacuum conditions are achieved, or for the re-establishment of the same in the event of their having been lost.

5. A "Soundproofing Module", according to preceding claims, **characterised in that** its greater sides feature a cladding for the dissipation of vibrations (2).

6. A "Soundproofing Module", according to preceding claims, **characterised in that** the hollow element (1) is comprised of two identical external parallelepipedic plastic parts (1a and 1b) whose external front sides are curved and whose internal rear sides are flat; these are arranged with the rear sides facing each other, with the insertion of an intermediate perimeter airtightness seal (5).

7. A "Soundproofing Module", according to preceding claims, **characterised in that** the vacuum valve is comprised preferably of a small flap (10) which closes over a small orifice (9) made in the surface of the greater sides of the parallelepipedic shaped hollow element (1).
